# EUROPÄISCHE PATENTANMELDUNG

(11) **EP 4 095 631 A1**
(43) Veröffentlichungstag der Anmeldung: **30.11.2022**
(21) Anmeldenummer: 21175836.2
(22) Anmeldetag: 25.05.2021
(51) Int. Cl.: G05B 19/401, G05B 19/18, G05B 19/404

(54) **VERFAHREN ZUM BEARBEITEN UND MESSEN VON WERKSTÜCKEN**

(71) Anmelder: Klingelnberg GmbH, 42499 Hückeswagen (DE)
(72) Erfinder: Ribbeck, Karl-Martin, 42897 Remscheid (DE)
(74) Vertreter: Janke Scholl Patentanwälte PartG mbB

(57) **Zusammenfassung**

Verfahren, mit den Verfahrensschritten: Bearbeiten eines Werkstücks (2) mittels eines Verzahnverfahrens, wobei eine Zahnflanke (4) des Werkstücks (2) hergestellt oder bearbeitet wird; Messen einer mittels des Verzahnverfahrens erzeugten Ist-Geometrie der Zahnflanke (4) des Werkstücks (2) mittels eines Messverfahrens; Bestimmen einer Abweichung der Ist-Geometrie der Zahnflanke (4) von einer vorgegebenen Soll-Geometrie der Zahnflanke (4); Bestimmen eines korrigierten Verzahnverfahrens zur zumindest teilweisen Reduzierung der Abweichung; Bearbeiten des Werkstücks (2) und/oder eines weiteren Werkstücks (2) mittels des korrigierten Verzahnverfahrens; wobei das Bestimmen des korrigierten Verzahnverfahrens zur zumindest teilweisen Reduzierung der Abweichung die Vorgabe aufweist, dass zwischen einem ersten Auswertebereich (AB1) der Zahnflanke (4) und einem zweiten Auswertebereich (AB2) der Zahnflanke (4) unterschieden wird, wobei für den ersten Auswertebereich (AB1) der Zahnflanke (4) eine erste zulässige Abweichung der Ist-Geometrie von der Soll-Geometrie vorgegeben ist, für den zweiten Auswertebereich (AB2) der Zahnflanke (4) eine zweite zulässige Abweichung der Ist-Geometrie von der Soll-Geometrie vorgegeben ist und die erste zulässige Abweichung geringer ist als die zweite zulässige Abweichung, und/oder wobei für eine mathematische Optimierung zur zumindest teilweisen Reduzierung der Abweichung für eine Abweichung des ersten Auswertebereichs (AB1) der Zahnflanke (4) eine erste Wichtung vorgegeben wird und für eine Abweichung des zweiten Auswertebereichs (AB2) der Zahnflanke (4) eine zweite Wichtung vorgegeben wird, wobei die erste Wichtung größer ist als die zweite Wichtung.

## Beschreibung

Die vorliegende Erfindung betrifft Verfahren zum Bearbeiten und Messen von Werkstücken. Werkstücke, die eine oder mehrere Zahnflanken aufweisen und die mit Verzahnverfahren hergestellt oder bearbeitet werden, sind z.B. Zahnräder von Laufverzahnungen. Derartige Laufverzahnungen übertragen und übersetzen im Betrieb Drehzahlen und Drehmomente zwischen rotierenden Wellen und werden beispielsweise in Kraftfahrzeuggetrieben, in Industriegetrieben, in der Luftfahrt oder in maritimen Anwendungen eingesetzt.

Die Anforderungen an die Genauigkeit bzw. die Qualität derartiger Laufverzahnungen sind in den vergangenen Jahren immer weiter angestiegen, beispielsweise durch den Trend zur Elektromobilität. So besteht beispielsweise die ständige Forderung, immer höhere Drehmomente und Drehzahlen mit kompakten und leichten Laufverzahnungen zuverlässig zu übertragen. Die Laufverzahnungen werden in Elektrofahrzeugen durch die Rekuperation beim Bremsvorgang Lastprofilen ausgesetzt, die bisher in rein verbrennungsmotorisch angetriebenen Fahrzeugen nicht aufgetreten sind. Weiter soll die Übertragung der Drehmomente und Drehzahlen möglichst geräuscharm erfolgen, da Getriebegeräusche in Elektrofahrzeugen nicht mehr durch das Geräusch eines Verbrennungsmotors maskiert werden und von den Fahrzeuginsassen als störend empfunden werden können.

Die Qualität von Verzahnungen wird in der industriellen Fertigung häufig durch sogenannte Closed-Loop Verfahren sichergestellt. Dabei wird eine Verzahnung auf einer Verzahnmaschine gefertigt und anschließend in einer Koordinatenmessmaschine zur Verzahnungsmessung gemessen, um die Einhaltung vorgegebener Toleranzen zu überprüfen. Zur Bestimmung von Abweichungen einer gemessenen Ist-Geometrie der Verzahnung von einer vorgegebenen Soll-Geometrie werden üblicherweise die Abweichungen an einigen wenigen Zähnen oder an allen Zähnen der Verzahnung gemessen und Mittelwerte der Abweichungen gebildet. Denn es kann davon ausgegangen werden, dass die korrigierbaren, systematischen Abweichungen für alle Zähne der Verzahnung ähnlich sind.

Liegen die mittleren Abweichungen nicht im vorgegebenen Bereich oder lässt sich ein Trend in Richtung der Überschreitung einer Toleranz erkennen, werden die Maschinenkinematik und/oder die Werkzeuggeometrie des Verzahnverfahrens anhand der Messergebnisse angepasst, so dass ein geschlossener Qualitätsregelkreis gebildet wird.

Abweichungen einer gemessenen Ist-Geometrie einer Zahnflanke von einer vorgegebenen Soll-Geometrie bzw. die mittleren Abweichungen werden dabei derart korrigiert, dass diese Abweichungen insgesamt minimiert werden. Dabei wird nicht unterschieden, in welchem Bereich der Zahnflanke die betreffende Abweichung vorliegt. Es kann daher dazu kommen, dass eine Abweichung in einem stark beanspruchten Bereich der Zahnflanke zwar innerhalb der vorgesehenen Toleranz korrigiert wird, jedoch nicht das volle Korrekturpotential für diesen stark beanspruchten Bereich ausgeschöpft wird, da gleichzeitig auch Abweichungen der Zahnflanke in nicht stark belasteten Bereichen und nicht tragenden Bereichen der Zahnflanke korrigiert werden. Da alle Bereiche der Zahnflanke im Rahmen der Korrektur gleichwertig behandelt werden, ist das Ergebnis der Korrektur ggf. ein ungünstiger Kompromiss zulasten des stark beanspruchten Bereichs.

Vor diesem Hintergrund liegt der Erfindung die technische Problemstellung zugrunde, verbesserte Verfahren anzugeben, die z.B. insbesondere eine verbesserte Auswertung und/oder Korrektur von Abweichungen von Zahnflanken ermöglichen. Die vorstehend beschriebene technische Problemstellung wird jeweils durch die unabhängigen Ansprüche gelöst. Weitere Ausgestaltungen der Erfindung ergeben sich aus den abhängigen Ansprüchen und der nachstehenden Beschreibung.

Gemäß einem ersten Aspekt betrifft die Erfindung ein Verfahren, mit den Verfahrensschritten: Bearbeiten eines Werkstücks mittels eines Verzahnverfahrens, wobei eine Zahnflanke des Werkstücks hergestellt oder bearbeitet wird; Messen einer mittels des Verzahnverfahrens erzeugten Ist-Geometrie der Zahnflanke des Werkstücks mittels eines Messverfahrens; Bestimmen einer Abweichung der Ist-Geometrie der Zahnflanke von einer vorgegebenen Soll-Geometrie der Zahnflanke; Bestimmen eines korrigierten Verzahnverfahrens zur zumindest teilweisen Reduzierung der Abweichung; Bearbeiten des Werkstücks und/oder eines weiteren Werkstücks mittels des korrigierten Verzahnverfahrens. Das Verfahren zeichnet sich dadurch aus, dass das Bestimmen des korrigierten Verzahnverfahrens zur zumindest teilweisen Reduzierung der Abweichung die Vorgabe aufweist, dass zwischen einem ersten Auswertebereich der Zahnflanke und einem zweiten Auswertebereich der Zahnflanke unterschieden wird, wobei für den ersten Auswertebereich der Zahnflanke eine erste zulässige Abweichung der Ist-Geometrie von der Soll-Geometrie vorgegeben ist, für einen zweiten Auswertebereich der Zahnflanke eine zweite zulässige Abweichung der Ist-Geometrie von der Soll-Geometrie vorgegeben ist und die erste zulässige Abweichung geringer ist als die zweite zulässige Abweichung. Alternativ oder ergänzend ist für eine mathematische Optimierung zur zumindest teilweisen Reduzierung der Abweichung für eine Abweichung des ersten Auswertebereichs der Zahnflanke eine erste Wichtung vorgegeben und für eine Abweichung des zweiten Auswertebereichs der Zahnflanke eine zweite Wichtung vorgegeben, wobei die erste Wichtung größer ist als die zweite Wichtung.

Das erfindungsgemäße Verfahren ermöglicht es, durch die Unterscheidung von Auswertebereichen der Zahnflanke bestimmte Abweichungen und Bereiche der Zahnflanke zu priorisieren und gezielter zu korrigieren.

So können z.B. für die Mitte der Zahnflanke sehr enge Toleranzen vorgegeben werden, die jedoch z.B. im Bereich von etwaigen Endenrücknahmen der Zahnflanke nicht erforderlich sind, da die Zahnflanke im Bereich von Endenrücknahmen im Betrieb nicht mit einer zugeordneten Gegenflanke in Eingriff kommt. Weiter kann eine Abweichung z.B. für die Mitte der Zahnflanke eine höhere Wichtung aufweisen als eine Abweichung im Bereich der Endenrücknahmen, so dass diese Abweichung im Bereich der Mitte der Zahnflanke im Zuge der mathematischen Optimierung verstärkt berücksichtigt wird.

Folglich kann erreicht werden, dass z.B. Abweichungen in Randbereichen nicht die Korrektur von Abweichungen in zu priorisierenden Bereichen einschränken oder begrenzen oder deren Einfluss auf die Korrektur zumindest verringert wird. Mit anderen Worten können die Abweichungen in Abhängigkeit von ihrer Position auf der Zahnflanke priorisiert und gewichtet werden, um das Korrekturergebnis insgesamt zu verbessern und vor dem Hintergrund der zu erwartenden Betriebslasten zu optimieren. Es kann vorgesehen sein, dass das Bestimmen des korrigierten Verzahnverfahrens mittels einer nichtlinearen Optimierung durchgeführt wird.

Die mathematische Optimierung kann eine Mehrkriterienoptimierung sein, wobei den Abweichungen des ersten Auswertebereichs eine höhere Wichtung zugordnet ist als den Abweichungen des zweiten Auswertebereichs.

Das Messverfahren kann mittels einer Koordinatenmessmaschine durchgeführt werden. Die Koordinatenmessmaschine kann eine optische Messeinrichtung zur optischen Verzahnungsmessung aufweisen. Die Koordinatenmessmaschine kann alternativ oder ergänzend eine taktile Messeinrichtung zur taktilen Verzahnungsmessung aufweisen.

Das Messverfahren kann mittels einer Werkzeugmaschine durchgeführt werden die sowohl zum Messen als auch zum Bearbeiten des Werkstücks eingerichtet ist. Die Werkzeugmaschine kann eine optische Messeinrichtung zur optischen Verzahnungsmessung aufweisen. Die Werkzeugmaschine kann alternativ oder ergänzend eine taktile Messeinrichtung zur taktilen Verzahnungsmessung aufweisen.

Die Soll-Geometrie des Werkstücks kann durch eine rechnergestützte Auslegung des Werkstücks als Datensatz erzeugt worden sein.

Die Soll-Geometrie kann z.B. eine funktionsorientierte Soll-Geometrie oder eine prozessorientierte Soll-Geometrie sein. Die funktionsorientierte Soll-Geometrie bildet die mit Blick auf Funktionseigenschaften festgelegte Geometrie des Werkstücks ab, die jedoch aufgrund von Grenzen der herstellbaren Werkzeuggeometrie und/oder der Maschinenkinematik in der Praxis ggf. nicht erreicht werden kann. Ein Beispiel ist ein evolventisches, schrägverzahntes Stirnrad mit einer reinen Breitenballigkeit als Modifikation. Wird dieses Stirnrad in einem konventionellen Wälzschleifprozess mit unmodifizierter Schleifschnecke geschliffen, so entsteht immer zusätzlich neben der Breitenballigkeit eine sogenannte natürliche Verschränkung.

Die prozessorientierte Soll-Geometrie ist diejenige Geometrie der Verzahnung, die unter Berücksichtigung einer abweichungsfreien Werkzeuggeometrie und einer abweichungsfreien Maschinenkinematik in einem Verzahnungsprozess entsteht. Beispielsweise handelt es sich bei der in der industriellen Praxis für die Messung spiralverzahnter Kegelräder verwendeten Soll-Geometrie um eine prozessorientierte Soll-Geometrie.

Die Ist-Geometrie der Zahnflanke des Werkstücks ist die mittels des Verzahnverfahrens an dem Werkstück erzeugte Geometrie.

Das Werkstück kann ein Zahnrad einer Laufverzahnung sein, wie ein Stirnrad, ein Kegelrad oder dergleichen, wobei beim Bearbeiten des Zahnrads mittels des Verzahnverfahrens eine Mehrzahl von Zahnflanken des Zahnrads bearbeitet oder hergestellt werden können.

Das Verzahnverfahren kann einen Bearbeitungsschritt oder mehrere Bearbeitungsschritte aufweisen.

Ein Bearbeitungsschritt des Verzahnverfahrens kann ein spanabhebendes Bearbeiten des Werkstücks mit einem Werkzeug mit geometrisch bestimmter Schneide aufweisen. Das spanabhebende Bearbeiten des Werkstücks mit dem Werkzeug mit geometrisch bestimmter Schneide kann z.B. ein Wälzfräsen, ein Formfräsen, ein Wälzstoßen, ein Wälzschälen, ein Kegelradfräsen oder dergleichen sein.

Ein Bearbeitungsschritt des Verzahnverfahrens kann ein spanabhebendes Bearbeiten des Werkstücks mit einem Werkzeug mit geometrisch unbestimmter Schneide aufweisen. Das spanabhebende Bearbeiten des Werkstücks mit dem Werkzeug mit geometrisch unbestimmter Schneide kann z.B. ein Schleifen, ein Läppen oder ein Honen sein.

Es kann vorgesehen, dass einer der vorgenannten Bearbeitungsschritte des Verzahnverfahrens als Vorverzahnen im weichen Zustand des Werkstücks durchgeführt wird, d.h. als Weichbearbeitung.

Es kann vorgesehen, dass einer der vorgenannten Bearbeitungsschritte des Verzahnverfahrens im harten Zustand des Werkstücks durchgeführt wird, d.h. nach dem Härten des Werkstücks als Hartbearbeitung.

Das Bestimmen eines korrigierten Verzahnverfahrens zur zumindest teilweisen Reduzierung der Abweichung kann einen Bearbeitungsschritt oder mehrere Bearbeitungsschritte betreffen. Insbesondere kann das Bestimmen des korrigierten Verzahnverfahrens einen Korrekturschritt oder mehrere Korrekturschritte aufweisen. Beispielsweise kann vorgesehen sein, dass jedem Bearbeitungsschritt ein Korrekturschritt zugeordnet sein kann.

Sofern beispielsweise zunächst ein Wälzfräsen eines Werkstücks im weichen Zustand erfolgt, kann nach dem Wälzfräsen ein Korrekturschritt des Wälzfräsens vorgenommen werden, um die Abweichungen des Bearbeitungsschritts "Wälzfräsens" zu reduzieren. Anschließend kann nach dem Härten des Werkstücks ein Hartbearbeiten des Werkstücks durch Wälzschleifen erfolgen, wobei nach dem Wälzschleifen ein Korrekturschritt des Wälzschleifens durchgeführt wird, um die Abweichungen des Bearbeitungsschritts "Wälzschleifen" zu reduzieren.

Sowohl der Korrekturschritt des Wälzfräsens als auch der Korrekturschritt des Wälzschleifens können derart durchgeführt werden, dass das Bestimmen des korrigierten Bearbeitungsschritts zur zumindest teilweisen Reduzierung der Abweichung für den jeweiligen Bearbeitungsschritt die Vorgaben aufweist, dass für einen ersten Auswertebereich der Zahnflanke eine erste zulässige Abweichung der Ist-Geometrie von der Soll-Geometrie vorgegeben ist, dass für einen zweiten Auswertebereich der Zahnflanke eine zweite zulässige Abweichung der Ist-Geometrie von der Soll-Geometrie vorgegeben ist und dass die erste zulässige Abweichung geringer ist als die zweite zulässige Abweichung.

Jedem Bearbeitungsschritt des Verzahnverfahrens kann daher ein bearbeitungsschrittspezifischer Korrekturschritt zugeordnet sein. Dabei können für die Bearbeitungsschritte dieselben Auswertebereiche der Zahnflanke vorgegeben sein oder voneinander abweichende Auswertebereiche der Zahnflanke vorgegeben sein. Alternativ oder ergänzend können für die Bearbeitungsschritte dieselben zulässigen Abweichungen für die Auswertebereiche der Zahnflanke vorgegeben sein oder voneinander abweichende zulässige Abweichungen für die Auswertebereiche der Zahnflanke vorgegeben sein.

Beispielsweise kann für den vorgenannten Bearbeitungsschritt "Wälzfräsen", der exemplarisch einen ersten Bearbeitungsschritt des Verzahnverfahrens darstellen kann, ein erster Auswertebereich der Zahnflanke vorgegeben sein, der von einem ersten Auswertebereich der Zahnflanke des vorgenannten Bearbeitungsschritts "Wälzschleifen", der exemplarisch einen zweiten Bearbeitungsschritt des Verzahnverfahrens darstellen kann, verschieden ist.

Beispielsweise kann für den vorgenannten Bearbeitungsschritt "Wälzfräsen", der exemplarisch einen ersten Bearbeitungsschritt des Verzahnverfahrens darstellen kann, ein zweiter Auswertebereich der Zahnflanke vorgegeben sein, der von einem zweiten Auswertebereich der Zahnflanke des vorgenannten Bearbeitungsschritts "Wälzschleifen", der exemplarisch einen zweiten Bearbeitungsschritt des Verzahnverfahrens darstellen kann, verschieden ist.

Alternativ können die ersten und zweiten Auswertebereiche der Bearbeitungsschritte "Wälzfräsen" und "Wälzschleifen" identisch sein.

Dies gilt gleichermaßen für die den jeweiligen Auswertebereichen zugeordneten zulässigen Abweichungen, so dass die zulässigen Abweichungen, die ersten Auswertebereichen der Bearbeitungsschritte zugeordnet sind, identisch zueinander sein können oder voneinander verschieden sind, und dass die zulässigen Abweichungen, die zweiten Auswertebereichen der Bearbeitungsschritte zugeordnet sind, identisch zueinander sein können oder voneinander verschieden sind.

Es kann vorgesehen sein, dass der erste Auswertebereich einen oder mehrere Teilbereiche der Zahnflanke aufweist, die zusammenhängend oder zumindest abschnittsweise beabstandet zueinander angeordnet sein können. Die Teilbereiche des ersten Auswertebereichs können daher unter einem Abstand über die Zahnflanke verteilt angeordnet sein und/oder unmittelbar aneinander angrenzen.

Jedem Teilbereich des ersten Auswertebereichs kann eine zulässige Teilbereichs-Abweichung zugeordnet sein, die innerhalb der zulässigen Abweichung des erste Auswertebereichs liegt und sich von einer weiteren zulässigen Teilbereichs-Abweichung eines weiteren Teilbereichs des ersten Auswertebereichs unterscheidet. Demnach können innerhalb des ersten Auswertebereichs weitere Abstufungen bzw. Gewichtungen vorgenommen werden, um innerhalb des ersten Auswertebereichs bestimmte Teilbereiche zu priorisieren.

Es kann vorgesehen sein, dass der zweite Auswertebereich einen oder mehrere Teilbereiche der Zahnflanke aufweist, die zusammenhängend oder zumindest abschnittsweise beabstandet zueinander angeordnet sein können. Die Teilbereiche des zweiten Auswertebereichs können daher unter einem Abstand über die Zahnflanke verteilt angeordnet sein und/oder unmittelbar aneinander angrenzen.

Jedem Teilbereich des zweiten Auswertebereichs kann eine zulässige Teilbereichs-Abweichung zugeordnet sein, die innerhalb der zulässigen Abweichung des zweiten Auswertebereichs liegt und sich von einer weiteren zulässigen Teilbereichs-Abweichung eines weiteren Teilbereichs des zweiten Auswertebereichs unterscheidet. Demnach können innerhalb des zweiten Auswertebereichs weitere Abstufungen bzw. Gewichtungen vorgenommen werden, um innerhalb des zweiten Auswertebereichs bestimmte Teilbereiche zu priorisieren.

Es kann vorgesehen sein, dass drei oder mehr Auswertebereiche vorgegeben werden. Jeder dieser drei oder mehr Auswertebereiche kann jeweils einen oder mehrere Teilbereiche der Zahnflanke aufweisen.

Die Auswertebereiche dienen dazu, stark beanspruchte oder belastete Flankenbereiche der Zahnflanke zu priorisieren, um in diesen priorisierten Bereichen z.B. engere Toleranzen zu ermöglichen. Alternativ oder ergänzend können Bereiche der Zahnflanken priorisiert werde, die für eine Geräuschanregung im Zahneingriff kritisch sind.

Dem ersten Auswertebereich kann ein Tragbereich Zahnflanke zugeordnet sein, der einen Abstand zu Enden oder Kanten der Zahnflanke aufweist. Alternativ oder ergänzend kann dem zweiten Auswertebereich ein Randbereich zugeordnet sein, der Enden oder Kanten der Zahnflanke aufweist oder an diese angrenzt.

Der Tragbereich der Zahnflanke umfasst insbesondere alle diejenigen Teilbereiche der Zahnflanke, die im Betrieb mit einer zugeordneten Gegenflanke in Kontakt gelangen und abwälzen, um Drehmomente und Drehzahlen zu übertragen und zu übersetzen, d.h. insbesondere alle Berührlinien oder Berührpunkte. Insbesondere umfasst der Tragbereich alternativ oder ergänzend alle diejenigen Teilbereiche der Zahnflanke, die im Betrieb eine vorgegebene Lastschwelle oder ein vorgegebenes Lastkriterium überschreiten.

Der Randbereich der Zahnflanke umfasst insbesondere alle diejenigen Teilbereiche der Zahnflanke, die die im Betrieb mit einer zugeordneten Gegenflanke nicht in Kontakt gelangen. Insbesondere umfasst der Randbereich alternativ oder ergänzend alle diejenigen Teilbereiche der Zahnflanke, die im Betrieb eine vorgegebene Lastschwelle oder ein vorgegebenes Lastkriterium unterschreiten.

Die Zuordnung eines Teilbereichs der Zahnflanke zum ersten Auswertebereich oder zum zweiten Auswertebereich kann in Abhängigkeit davon erfolgen, ob im Betrieb ein Kontakt des betreffenden Teilbereichs zu einer Gegenflanke stattfindet. Alternativ oder ergänzend kann die Zuordnung eines Teilbereichs der Zahnflanke zum ersten Auswertebereich oder zum zweiten Auswertebereich in Abhängigkeit davon erfolgen, ob eine vorgegebene Lastschwelle oder ein vorgegebenes Lastkriterium unterschritten oder überschritten wird.

Wenn vorliegend von einer Lastschwelle gesprochen wird, so handelt es sich dabei beispielsweise um einen vorgegebenen Grenzwert für die im Betrieb auftretende Hertzsche Pressung. So kann z.B. vorgesehen sein, dass einer oder mehrere Teilbereiche der Zahnflanke, für die die Überschreitung einer vorgegebenen Hertzschen Pressung im Betrieb zu erwarten ist, dem ersten Auswertebereich zugeordnet sind und dass einer oder mehrere Teilbereiche der Zahnflanke, für keine Überschreitung einer vorgegebenen Hertzschen Pressung im Betrieb zu erwarten ist, dem zweiten Auswertebereich zugeordnet sind.

Wenn vorliegend von einem Lastkriterium gesprochen wird so handelt es sich dabei beispielsweise um einen vorgegeben Grenzwert, der mindestens zwei Einflussgrößen berücksichtigt, die einen Einfluss auf die Tragfähigkeit haben, wie zum Beispiel die Hertzsche Pressung und den Schlupf. So kann z.B. vorgesehen sein, dass einer oder mehrere Teilbereiche der Zahnflanke, für die die Überschreitung einer vorgegebenen Hertzschen Pressung und eines vorgegebenen Schlupfs im Betrieb zu erwarten ist, dem ersten Auswertebereich zugeordnet sind und dass einer oder mehrere Teilbereiche der Zahnflanke, für keine Überschreitung einer vorgegebenen Hertzschen Pressung und eines vorgegebenen Schlupfs im Betrieb zu erwarten ist, dem zweiten Auswertebereich zugeordnet sind.

Wenn vorliegend von einer zulässigen Abweichung der Ist-Geometrie von der Soll-Geometrie gesprochen wird, so kann die zulässige Abweichung einzuhaltende Toleranzen für eine oder mehrere der nachfolgend aufgelisteten Verzahnungsabweichungen und Verzahnungsmodifikationen handeln, die auch als Parameter bzw. Qualitätsmerkmale einer Verzahnung bezeichnet werden können:
- Profilabweichungen, wie die Profil-Gesamtabweichung, die Profil-Formabweichung, die Profil-Winkelabweichung, die Eingriffswinkelabweichung oder dergleichen, und/oder die Abweichungen einer oder mehrerer Zahnflankenmodifikationen in Profilrichtung, wie Abweichungen der Höhenballigkeit, der Kopf- und/oder Fußrücknahme, der Profil- Winkelmodifikation, der Profilverschränkung oder dergleichen;
- Flankenlinienabweichungen, wie die Flankenlinien-Gesamtabweichung, die Flankenlinien-Formabweichung, die Flankenlinien-Winkelabweichung, die Spiralwinkelabweichung oder dergleichen und/oder die Abweichungen einer oder mehrerer Zahnflankenmodifikationen in Flankenrichtung, wie Abweichungen der Breitenballigkeit, der Endenrücknahmen, der Flankenlinien-Winkelmodifikation, der Flankenlinienverschränkung oder dergleichen.

Wenn vorliegend von einer zulässigen Abweichung der Ist-Geometrie von der Soll-Geometrie gesprochen wird, so kann dies nicht nur eine einzelne Zahnflanke oder einen einzelnen Zahn für sich genommen betreffen, sondern zwei oder mehr Zahnflanken oder Zähne des Werkstücks, die entsprechend der vorgenannten Abweichungen ausgewertet werden. Insbesondere kann gegen mittlere Abweichungen korrigiert werden, die aus den Abweichungen der Ist-Geometrie von der Soll-Geometrie für zwei oder mehr Zahnflanken gebildet werden.

Alternativ oder ergänzend kann die zulässige Abweichung einzuhaltende Toleranzen für zwei oder mehr Zähne oder Zahnflanken des Werkstücks eine oder mehrere der nachfolgend aufgelisteten Verzahnungsabweichungen aufweisen:
- Teilungsabweichungen, wie die Teilungseinzelabweichung, die Teilungssummenabweichung, den Teilungssprung oder dergleichen;
- Zahndickenabweichungen;
- Rundlaufabweichungen
- Rundheitsabweichungen;
- Planlaufabweichungen;
- Ebenheitsabweichungen;
- Verwindung / Verschränkung.

Es kann vorgesehen sein, dass die erste zulässige Abweichung der Ist-Geometrie von der Soll-Geometrie für einen jeweiligen Messpunkt oder einen Abschnitt des ersten Auswertebereichs ausgewählt aus einem Bereich kleinergleich 10 µm ist, insbesondere ausgewählt aus einem Bereich kleinergleich 5 µm ist, und die zweite zulässige Abweichung der Ist-Geometrie von der Soll-Geometrie für einen jeweiligen Messpunkt oder einen Abschnitt des zweiten Auswertebereichs ausgewählt aus einem Bereich kleinergleich 15 µm ist, insbesondere ausgewählt aus einem Bereich kleinergleich 10 µm ist. Es können daher Absolutbeträge für die jeweiligen zulässigen Abweichungen vorgegeben werden.

Beispielsweise kann vorgesehen sein, dass Bestimmen eines korrigierten Verzahnverfahrens ein Reduzieren der Einzelabweichungen der Messpunkte für mindestens einen der Auswertebereiche unter einen vorgegebenen Schwellwert aufweist, wobei der Schwellwert beispielsweise 10 µm oder weniger beträgt, insbesondere 5 µm oder weniger beträgt.

Beispielsweise kann vorgesehen sein, dass Bestimmen eines korrigierten Verzahnverfahrens für mindestens einen der Auswertebereiche ein Minimieren der Summe der Fehlerquadrate aufweist.

Beispielsweise kann vorgesehen sein, dass Bestimmen eines korrigierten Verzahnverfahrens für mindestens einen der Auswertebereiche ein Optimieren von aus den Abweichungen berechneten Parametern bzw. Qualitätsmerkmalen aufweist, wie z.B. eine Minimierung einer Spiralwinkelabweichung eines Kegelrads. Es kann beispielsweise vorgesehen sein, dass für den ersten Auswertebereich der Zahnflanke oder den jeweiligen ersten Auswertebereich mehrerer Zahnflanken die erste zulässige Abweichung vorgegeben ist, wobei die erste zulässige Abweichung erste zulässige Toleranzen für die Höhenballigkeit, die Profil-Winkelabweichung, die Breitenballigkeit, die Breitenballigkeit und die Flankenlinien-Winkelabweichung aufweist, und dass für den zweiten Auswertebereich der Zahnflanke oder den jeweiligen zweiten Auswertebereich mehrerer Zahnflanken die zweite zulässige Abweichung vorgegeben ist, wobei die zweite zulässige Abweichung zweite zulässige Toleranzen für die Höhenballigkeit, die Profil-Winkelabweichung, die Breitenballigkeit, die Breitenballigkeit und die Flankenlinien-Winkelabweichung aufweist, die sich teilweise oder vollständig von den zulässigen Toleranzen der ersten zulässigen Abweichung unterscheiden.

Es kann vorgesehen sein, dass für den ersten Auswertebereich unterschiedliche Parameter herangezogen werden, so dass beispielsweise für den ersten Auswertebereich der Zahnflanke oder den jeweiligen ersten Auswertebereich mehrerer Zahnflanken die erste zulässige Abweichung vorgegeben ist, die zulässige Toleranzen für die Höhenballigkeit, die Profil-Winkelabweichung, die Breitenballigkeit, die Breitenballigkeit und die Flankenlinien-Winkelabweichung aufweist, während für den zweiten Auswertebereich der Zahnflanke oder den jeweiligen zweiten Auswertebereich mehrerer Zahnflanken die zweite zulässige Abweichung vorgegeben ist, wobei die zweite zulässige Abweichung zulässige Toleranzen für Abweichungen von Endenrücknahmen, Kopfrücknahmen oder Fußrücknahmen aufweist.

So können die für den jeweiligen Auswertebereich besonders relevanten Parameter bzw. Qualitätsmerkmale der Verzahnung berücksichtigt und korrigiert werden.

Wie zuvor bereits dargelegt, kann das Messen der Ist-Geometrie einer Zahnflanke oder mehrerer Zahnflanken des Werkstücks mittels optischer und/oder taktiler Messverfahren erfolgen.

Es kann vorgesehen sein, dass beim Messen der mittels des Verzahnverfahrens erzeugten Ist-Geometrie der Zahnflanke des Werkstücks mittels des Messverfahrens ein Messgitter mit Messpunkten erfasst wird, dass beim Bestimmen der Abweichung der Ist-Geometrie der Zahnflanke von der vorgegebenen Soll-Geometrie der Zahnflanke für jeden Messpunkt des Messgitters eine jeweilige Abweichung der Ist-Position des jeweiligen Messpunkts von der Soll-Position des jeweiligen Messpunkts bestimmt wird, und dass eine erste Gruppe der Messpunkte dem ersten Auswertebereich zugeordnet wird und dass eine zweite Gruppe der Messpunkte dem zweiten Auswertebereich zugordnet wird. Soweit ein dritter, vierter oder n-ter Auswertebereich vorgesehen sind, würde dementsprechend eine dritte, vierte oder n-te Gruppe der Messpunkte dem jeweiligen dritten, vierten oder n-ten Auswertebereich zugeordnet werden.

Es kann vorgesehen sein, dass die Auswertebereiche nicht überlappen. Ein Messpunkt der gemessenen Ist-Geometrie, der einem jeweiligen Auswertebereich zugeordnet ist, ist insbesondere keinem weiteren Auswertebereich zugeordnet.

Es kann vorgesehen sein, dass die Auswertebereiche überlappen.

Die Auswertebereiche können insbesondere derart überlappen, dass einer oder mehrere Messpunkte einem Auswertebereich und zudem einem weiteren Auswertebereich zugeordnet sind. Soweit eine Wichtung und/oder Toleranz vorgegeben ist, ist für einen Messpunkt, der zwei oder mehr Auswertebereichen zugeordnet ist, die jeweils zugeordnete höchste Wichtung und geringste Toleranz vorrangig.

Die Auswertebereiche können insbesondere derart überlappen, dass keiner der Messpunkte, der einem Auswertebereich zugeordnet ist, einem weiteren Auswertebereich zugeordnet ist. Beispielsweise kann ein Auswertebereich durch ein Messgitter mit Messpunkten aufgespannt sein und ein weiterer Auswertebereich durch einen Kontaktpfad definiert sein, der jedoch keinen Messpunkt des Messgitters schneidet.

Es kann vorgesehen sein, dass Gitterlinien eines Messgitters scannend erfasst werden, wobei jede Gitterlinie mit einer vorgegebenen Auflösung gescannt wird. Die Messpunkte können aus einer sich aus den Scandaten ergebenden Messpunktwolke bestimmt werden. Alternativ oder ergänzend kann vorgesehen sein, dass einzelne Messpunkte des Gitters einzeln angefahren und gemessen werden.

Es kann vorgesehen sein, dass ein Kontaktpfad scannend erfasst wird, wobei der Kontaktpfad mit einer vorgegebenen Auflösung gescannt wird.

Es kann vorgesehen sein, dass der Kontaktpfad mit einer höheren Auflösung gescannt wird als Gitterlinien eines Messgitters.

Ein Messgitter kann in Zeilen und Spalten angegeben werden, so dass beispielsweise ein Messgitter durch eine Anzahl von Zeilen i, wobei i eine natürliche Zahl größer 1 ist, und eine Anzahl von Spalten j, wobei j eine natürliche Zahl größer 1 ist, definiert ist, und die Zeilen und Spalten sich kreuzen, insbesondere in einer Projektion z.B. unter einem Winkel von ca. 90° kreuzen (Radialprojektion). Insbesondere definieren Kreuzungspunkte und Endpunkte der Zeilen und Spalten die Messpunkte eines solchen Messgitters.

Wie zuvor bereits beschrieben, können die Zeilen und Spalten eines Messgitters scannend erfasst, d.h. kontinuierlich abgefahren werden. Soweit z.B. ein taktiler Messtaster verwendet wird, fährt der Messtaster jede Gitternetzlinie, d.h. jede der Zeilen und Spalten, jeweils im kontinuierlichen Eingriff mit der Zahnflanke ab, wobei Messwerte in einer vorgegebenen Auflösung erfasst werden. Beispielsweise kann vorgesehen sein, dass für jede Gitternetzlinie während des Scanvorgangs mehr als 10 und weniger als 1000 Messpunkte erfasst werden, wobei die Messpunkte insbesondere äquidistant entlang der betreffenden Gitternetzlinie verteilt angeordnet sein können.

Aus den Messpunkten der gescannten Gitternetzlinien können einzelne Messpunkte oder Parameter bzw. Qualitätsmerkmale der Verzahnung bzw. der Zahnflanke abgeleitet werden.

Ein Messgitter kann eingerückt sein, d.h. einen Abstand zu Rändern oder Kanten der Zahnflanke aufweisen, um das Messergebnis durch etwaige Grate im Bereich der Ränder oder Kanten nicht zu verfälschen.

Der erste und der zweite Auswertebereich können beispielsweise derart bestimmt werden, dass eine Schnittmenge zwischen den Berührlinien einer Zahnflanke und dem Messgitter gebildet wird und z.B. alle Messpunkte, die die Berührlinien schneiden oder innerhalb eines die Berührlinien einhüllenden Teilbereichs der Zahnflanke liegen, dem ersten Auswertebereich zugeordnet werden, und alle Messpunkte, die die Berührlinien nicht schneiden oder nicht innerhalb eines die Berührlinien einhüllenden Teilbereichs der Zahnflanke liegen, dem zweiten Auswertebereich zugeordnet werden.

Die Berührlinien oder ein die Berührlinien einhüllender Teilbereich der Zahnflanke können durch rechnergestützte Simulationen und/oder Prüfstandsversuche ermittelt werden.

Gemäß einer Ausgestaltung des Verfahrens ist vorgesehen, dass nach dem Bearbeiten des Werkstücks und/oder eines weiteren Werkstücks mittels des korrigierten Verzahnverfahrens eine Ist-Abweichung einer mittels des korrigierten Verzahnverfahrens bearbeiteten Zahnflanke für den ersten Auswertebereich geringer ist als die erste zulässige Abweichung und für den zweiten Auswertebereich geringer ist als die zweite zulässige Abweichung.

Gemäß einer Ausgestaltung des Verfahrens ist vorgesehen, dass beim Bearbeiten des Werkstücks mittels des Verzahnverfahrens zwei oder mehr Zahnflanken des Werkstücks hergestellt oder bearbeitet werden, dass beim Messen der mittels des Verzahnverfahrens erzeugten Ist-Geometrie zwei oder mehr Zahnflanken des Werkstücks mittels des Messverfahrens gemessen werden; dass beim Bestimmen von Abweichungen der Ist-Geometrie der jeweils gemessenen Zahnflanken von der vorgegebenen Soll-Geometrie eine mittlere Abweichung aus den Abweichungen der jeweils gemessenen Zahnflanken bestimmt wird; und dass das Bestimmen des korrigierten Verzahnverfahrens zur zumindest teilweisen Reduzierung der Abweichungen anhand der mittleren Abweichung erfolgt und für alle Zahnflanken gilt.

Mit anderen Worten werden zur Bestimmung von Abweichungen einer gemessenen Ist-Geometrie der Zahnflanken von einer vorgegebenen Soll-Geometrie die Abweichungen an einigen wenigen Zähnen oder an allen Zähnen der Verzahnung gemessen und Mittelwerte der Abweichungen gebildet. Denn es kann davon ausgegangen werden, dass die korrigierbaren, systematischen Abweichungen für alle Zahnflanken des Werkstücks ähnlich sind. Die Zahnflanken werden somit im Mittel korrigiert, insbesondere bei kontinuierlichen Teilverfahren. Im Einzelteilverfahren könnten einzelne Zahnflanken für sich genommenen individuell korrigiert werden.

Das korrigierte Verzahnverfahren kann im Vergleich zum Verzahnverfahren eine geänderte Kinematik aufweisen. Alternativ oder ergänzend kann das korrigierte Verzahnverfahren im Vergleich zum Verzahnverfahren eine geänderte Werkzeuggeometrie aufweisen.

Es kann vorgesehen sein, dass vor dem Bestimmen des korrigierten Verzahnverfahrens die Möglichkeit der Veränderung der Werkzeuggeometrie freigegeben oder gesperrt wird und/oder dass vor dem Bestimmen des korrigierten Verzahnverfahrens die Möglichkeit der Veränderung der Kinematik freigegeben oder gesperrt wird. Es kann daher vorgegeben werden, welche Freiheitsgrade für die Korrektur zur Verfügung stehen. Beispielsweise kann bei nicht abrichtbaren Werkzeugen nicht von der Form des Werkzeugs abgewichen werden bzw. die Änderungen der Werkzeugform würde einen zu hohen Zeit- und Kostenaufwand bedeuten. Im Falle nicht abrichtbarer Werkzeuge, wie z.B. einem Fräswerkzeug, würde daher die Möglichkeit der Veränderung der Werkzeuggeometrie gesperrt werden und die Möglichkeit der Veränderung der Kinematik freigegeben werden, während z.B. im Falle eines abrichtbaren Schleifwerkzeugs die Möglichkeit der Veränderung der Werkzeuggeometrie und auch der Kinematik freigegeben werden könnte.

Es kann vorgesehen sein, dass nur bestimmte Parameter des Werkzeugs für die Korrektur zur Verfügung stehen. So können z.B. bestimmte Freiwinkel gesperrt sein, die für eine kollisionsfreie Fertigung erforderlich sind.

Es kann vorgesehen sein, dass nur bestimmte Parameter der Kinematik für die Korrektur zur Verfügung stehen. So können z.B. die Werkzeugdrehzahl, der Vorschub und/oder einzelne Achsen, die die Relativbewegung zwischen Werkzeug und Werkstück erzeugen, gesperrt sein.

Das Werkstück ist insbesondere ein Zahnrad einer Laufverzahnung, wie ein Stirnrad, ein Kegelrad oder dergleichen, wobei beim Bearbeiten des Zahnrads mittels des Verzahnverfahrens eine Mehrzahl von Zahnflanken des Zahnrads bearbeitet oder hergestellt werden.

Gemäß einem zweiten Aspekt betrifft die Erfindung ein Verfahren, mit den Verfahrensschritten: Messen einer mittels eines Verzahnverfahrens erzeugten Ist-Geometrie einer Zahnflanke eines Werkstücks mittels eines Messverfahrens; Bestimmen einer Abweichung der Ist-Geometrie der Zahnflanke von einer vorgegebenen Soll-Geometrie der Zahnflanke; Auswertung der Abweichung; Das Verfahren zeichnet sich dadurch aus, dass die Auswertung der Abweichung die Vorgabe aufweist, dass für einen ersten Auswertebereich der Zahnflanke eine erste zulässige Abweichung der Ist-Geometrie von der Soll-Geometrie vorgegeben ist, dass für einen zweiten Auswertebereich der Zahnflanke eine zweite zulässige Abweichung der Ist-Geometrie von der Soll-Geometrie vorgegeben ist und dass die erste zulässige Abweichung geringer ist als die zweite zulässige Abweichung.

Es wird daher eine Priorisierung bzw. Wichtung von Bereichen der Zahnflanke ermöglicht, in dem für den ersten Auswertebereich engere Toleranzen vorgegeben werden als für den zweiten Auswertebereich.

Der erste Auswertebereich und der zweite Auswertebereich sowie die zulässigen Abweichungen entsprechen denjenigen Auswertebereichen und Abweichungen, die bereits für den ersten Aspekt der Erfindung beschrieben worden sind. Alle Varianten und Ausgestaltung der Auswertebereiche und der zulässigen Abweichungen, die für den ersten Aspekt der Erfindung beschrieben worden sind, gelten daher auch für den zweiten Aspekt der Erfindung und lassen sich in identischer Weise auf den zweiten Aspekt der Erfindung übertragen.

Insbesondere kann z.B. vorgesehen sein, dass dem ersten Auswertebereich ein Tragbereich Zahnflanke zugeordnet ist, der einen Abstand zu Enden oder Kanten der Zahnflanke aufweist und/oder dass dem zweiten Auswertebereich ein Randbereich zugeordnet ist, der Enden oder Kanten der Zahnflanke aufweist oder an diese angrenzt.

Insbesondere kann z.B. vorgesehen sein, dass beim Messen der mittels des Verzahnverfahrens erzeugten Ist-Geometrie der Zahnflanke des Werkstücks mittels des Messverfahrens ein Messgitter mit Messpunkten erfasst wird, dass beim Bestimmen der Abweichung der Ist-Geometrie der Zahnflanke von der vorgegebenen Soll-Geometrie der Zahnflanke für jeden Messpunkt des Messgitters eine Abweichung der Ist-Position des jeweiligen Messpunkts von der Soll-Position des jeweiligen Messpunkts bestimmt wird, und dass eine erste Gruppe der Messpunkte dem ersten Auswertebereich zugeordnet ist und dass eine zweite Gruppe der Messpunkte dem zweiten Auswertebereich zugordnet ist.

Nachfolgend wird die Erfindung anhand von Ausführungsbeispiele darstellenden Zeichnungen näher beschrieben. Es zeigen jeweils schematisch:
- Fig. 1: einen Ablaufplan eines erfindungsgemäßen Verfahrens gemäß dem ersten Aspekt der Erfindung;
- Fig. 2: ein Werkstück in Form eines Verzahnungsrohlings;
- Fig. 3: das Werkstück aus Fig. 2 beim Vorverzahnen;
- Fig. 4: das Werkstück aus Fig. 3 nach dem Vorverzahnen;
- Fig. 5: das Werkstück aus Fig. 4 mit einem Messgitter;
- Fig. 6: eine Verzahnungsmessmaschine mit dem vorverzahnten Werkstück aus Fig. 4;
- Fig. 7: eine Zahnflanke mit einem Messgitter;
- Fig. 8: die Zahnflanke aus Fig. 7 mit Messpunkten des Messgitters aus Fig. 7;
- Fig. 9: die Zahnflanke und die Messpunkte aus Fig. 8 mit Auswertebereichen;
- Fig. 11: Messpunkte eines ersten Auswertebereichs;
- Fig. 12: Messpunkte eines zweiten Auswertebereichs;
- Fig. 13: die Zahnflanke und die Messpunkte aus Fig. 8 mit weiteren Auswertebereichen;
- Fig. 14: Messpunket eines ersten Auswertebereichs gemäß Fig. 13;
- Fig. 15: Messpunkte eines zweiten Auswertebereichs gemäß Fig. 13;
- Fig. 16: die Zahnflanke und die Messpunkte aus Fig. 8 mit weiteren Auswertebereichen;
- Fig. 17: Messpunkte eines ersten Auswertebereichs gemäß Fig. 16;
- Fig. 18: Messpunkte eines zweiten Auswertebereichs gemäß Fig. 16;
- Fig. 19: Messpunkte eines zweiten Auswertebereichs gemäß Fig. 16;
- Fig. 20: das Werkstück aus Fig. 4 bei der Hartbearbeitung;
- Fig. 21: eine Fertigungskette;
- Fig. 22: einen Ablaufplan eines erfindungsgemäßen Verfahrens gemäß dem zweiten Aspekt der Erfindung
- Fig. 23: ein Kegelrad;
- Fig. 24: eine vergrößerte Darstellung des Kegelrads aus Fig. 23;
- Fig. 25: die Zahnflanke mit einem Messgitter und einem Kontaktpfad;
- Fig. 26: Messpunkte eines ersten und zweiten Auswertebereichs;
- Fig. 27: Messpunkte des ersten Auswertebereichs;
- Fig. 28: Messpunkte des zweiten Auswertebereichs.

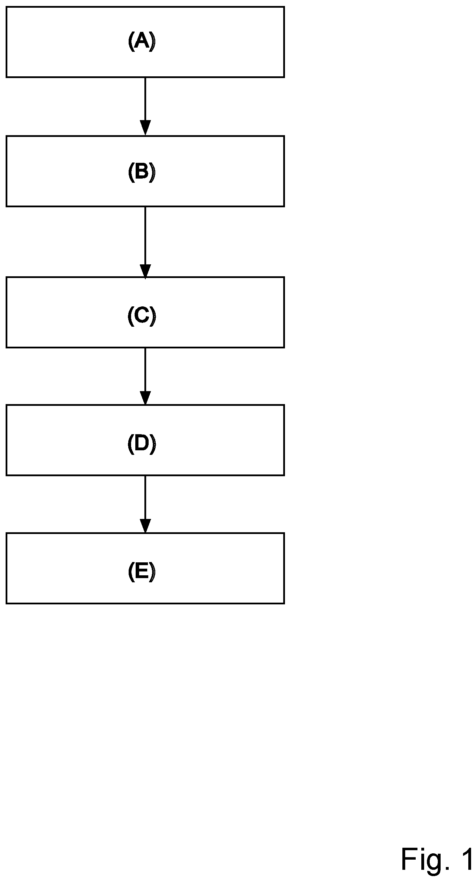

Fig. 1 zeigt einen Ablaufplan eines erfindungsgemäßen Verfahrens gemäß dem ersten Aspekt der Erfindung.

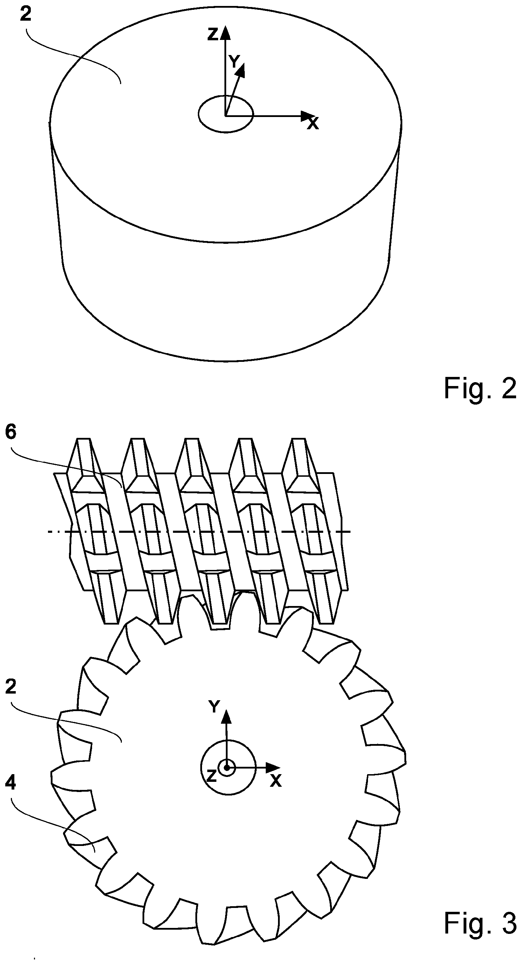

Zunächst erfolgt im Verfahrensschritt (A) das Bearbeiten eines Werkstücks 2 mittels eines Verzahnverfahrens, wobei Zahnflanken 4 des Werkstücks 2 hergestellt werden. Hierzu wird das Werkstück 2 zunächst als unverzahnter Rohling 2 bereitgestellt, wie in Fig. 2 gezeigt.

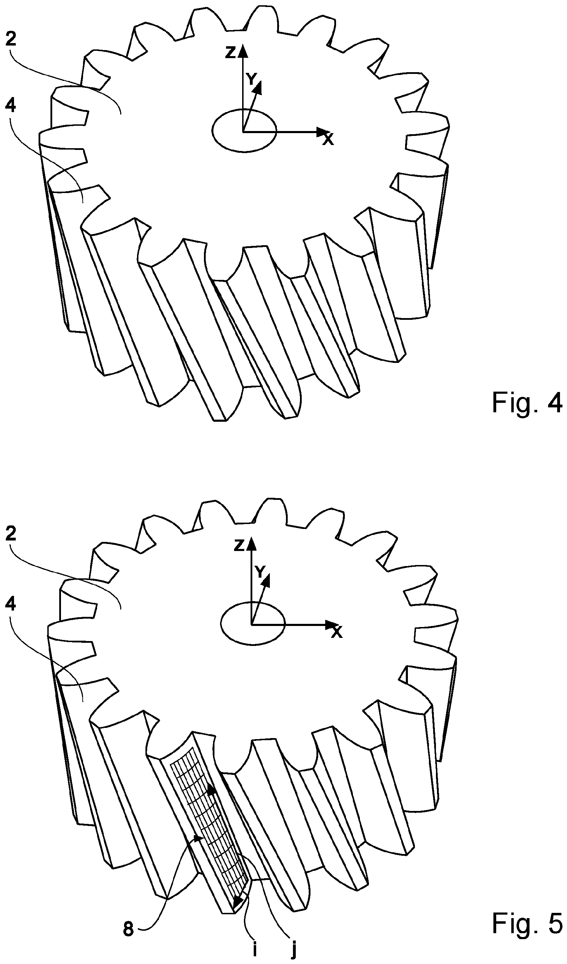

Die Bearbeitung des Rohlings 2 erfolgt durch Wälzfräsen im weichen Zustand, so dass der Rohling 2 vor dem Wälzfräsen nicht gehärtet worden ist. Das Verzahnverfahren weist daher den Bearbeitungsschritt "Wälzfräsen" auf, wie in Fig. 3 mit dem Wälzfräswerkzeug 6 schematisch dargestellt. Das Wälzfräsen kann hier auch als Weichbearbeitung oder Vorverzahnen bezeichnet werden. Fig. 4 zeigt das Werkstück 2 nach dem Wälzfräsen. Das Werkstück 2 gemäß Fig. 4 ist ein schrägverzahntes Stirnrad 2.

Anschließend erfolgt in einem Verfahrensschritt (B) ein Messen einer mittels des Wälzfräsens erzeugten Ist-Geometrie der Zahnflanken 4 des Werkstücks 2 mittels eines Messverfahrens.

Hierzu wird ein Messgitter 8 definiert, wie in Fig. 5 exemplarisch für eine der Zahnflanken 4 gezeigt. Das Messgitter 8 hat eine vorgegebene Anzahl von Zeilen i und Spalten j. Jeder Kreuzungspunkt und jeder Endpunkt der Gitterlinien des Messgitters 8 bildet einen Messpunkt 10, so dass beim Bestimmen der Abweichung der Ist-Geometrie der Zahnflanke 4 von der vorgegebenen Soll-Geometrie der Zahnflanke 4 für jeden Messpunkt 10 des Messgitters 8 eine jeweilige Abweichung der Ist-Position des jeweiligen Messpunkts 10 von der Soll-Position des jeweiligen Messpunkts 10 bestimmt wird. Die Messpunkte 10 können durch eine einzelne Antastung oder durch ein Scannen der Gitterlinien des Messgitters 8 bestimmt werden.

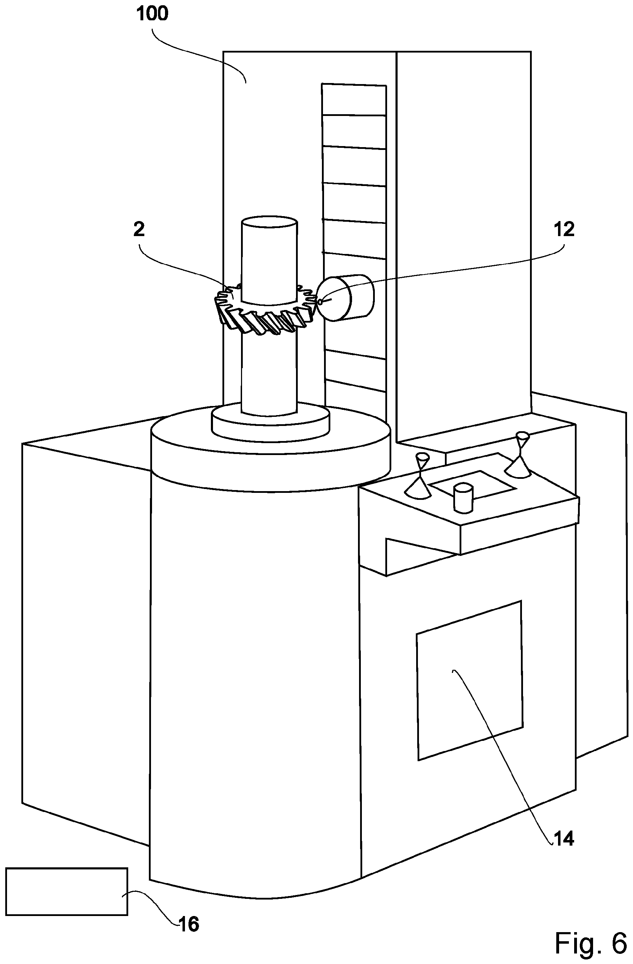

Das Messverfahren wird mittels einer Koordinatenmessmaschine 100 durchgeführt, wobei ein Messtaster 12 das Messgitter 8 für eine oder mehr Zahnflanken 4 oder für jede der Zahnflanken 4 abfährt, um für die gemessenen Zahnflanken 4 die Ist-Position der Messpunkte 10 des Messgitters 8 zu bestimmen (Fig. 6).

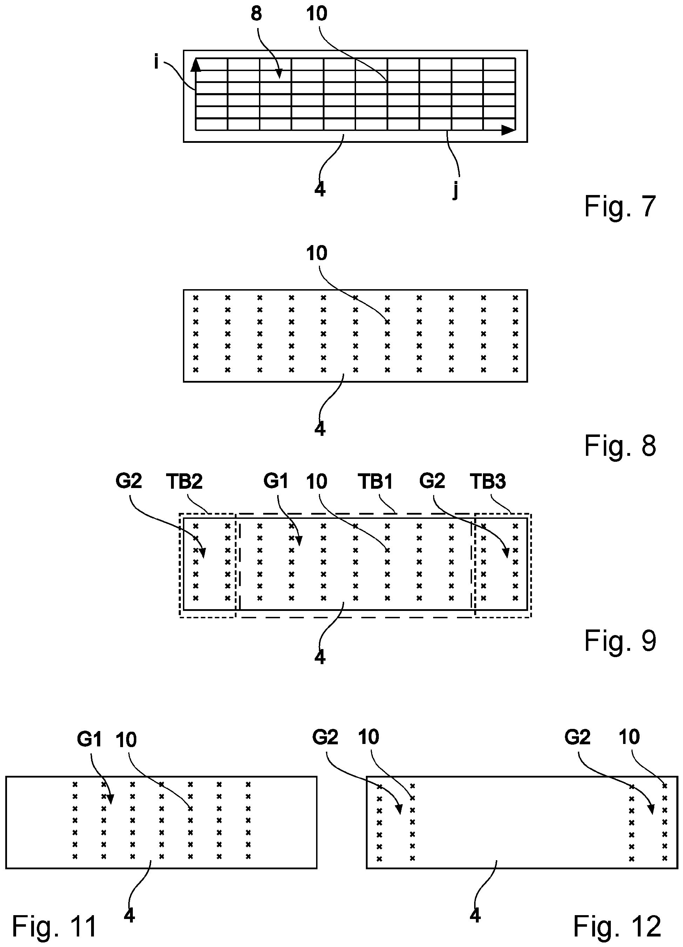

Fig. 7 zeigt schematisch des Messgitter 8 für eine der Zahnflanken 4, wobei das Messgitter 8 sieben Zeilen i und elf Spalten j aufweist, die jeweils durch die Gitternetzlinien dargestellt sind. Hieraus ergeben sich 77 Messpunkte 10, die in Fig. 8 gezeigt sind.

Danach erfolgt in einem Verfahrensschrittt (C) ein Bestimmen einer Abweichung der Ist-Geometrie der gemessenen Zahnflanken 4 von einer vorgegebenen Soll-Geometrie der Zahnflanken 4 anhand der Messpunkte 10. Das Bestimmen der Abweichung kann rechnergestützt mittels eines Messrechners 14 der Koordinatenmessmaschine 100 erfolgen oder mittels eines externen Rechners 16, der nicht Teil der Koordinatenmessmaschine 100 ist.

In einem Verfahrensschritt (D) erfolgt ein Bestimmen eines korrigierten Verzahnverfahrens zur zumindest teilweisen Reduzierung der Abweichung, wobei das Bestimmen des korrigierten Verzahnverfahrens zur zumindest teilweisen Reduzierung der Abweichung die Vorgaben aufweist, dass für einen ersten Auswertebereich AB1 der Zahnflanke 4 eine erste zulässige Abweichung der Ist-Geometrie von der Soll-Geometrie vorgegeben ist, dass für einen zweiten Auswertebereich AB2 der Zahnflanke 4 eine zweite zulässige Abweichung der Ist-Geometrie von der Soll-Geometrie vorgegeben ist und dass die erste zulässige Abweichung geringer ist als die zweite zulässige Abweichung. Es erfolgt daher ein erster Korrekturschritt bzw. eine erste Korrekturschleife für den Bearbeitungsschritt "Wälzfräsen" des Verzahnverfahrens.

Der erste Auswertebereich AB1 weist vorliegend einen Teilbereich TB1 der Zahnflanke 4 auf. Der ersten Auswertebereich AB1 entspricht daher vorliegend dem ersten Teilbereich TB1 (Fig. 9).

Der zweite Auswertebereich AB2 weist vorliegend zwei Teilbereiche der Zahnflanke auf - und zwar einen Teilbereich TB2 und einen Teilbereich TB3. Der zweite Auswertebereich entspricht daher den Teilbereichen TB2 und TB3. Die Teilbereiche TB2 und TB3 sind beabstandet zueinander angeordnet (Fig. 9).

Alle diejenigen Messpunkte 10, die innerhalb des ersten Auswertebereichs AB1 angeordnet sind, bilden eine ersten Gruppe G1 der Messpunkte 10 (Fig. 11). Alle diejenigen Messpunkte 10, die innerhalb des zweiten Auswertebereichs AB2 angeordnet sind, bilden eine zweite Gruppe G2 der Messpunkte 10 (Fig. 12).

Beim Bestimmen des korrigierten Verzahnverfahrens durch den ersten Korrekturschritt für den Bearbeitungsschritt "Wälzfräsen" werden für die Messpunkte 10 der ersten Gruppe G1 daher engere Toleranzen bzw. geringere zulässige Abweichungen berücksichtigt als für die die zweite Gruppe G2 der Messpunkte 10. Weiter wird für eine mathematische Optimierung zur zumindest teilweisen Reduzierung der Abweichung für eine Abweichung des ersten Auswertebereichs AB1 der Zahnflanke 4 eine erste Wichtung W1 vorgegeben wird und für eine Abweichung des zweiten Auswertebereichs AB2 der Zahnflanke 4 eine zweite Wichtung W2 vorgegeben, wobei die erste Wichtung W1 größer ist als die zweite Wichtung W2. Dabei wird im Rahmen der Optimierung die Summe S der gewichteten Abweichungen minimiert, mit z.B. S = (W1^{∗}Abweichung AB1)+(W2^{∗}Abweichung AB2). Es versteht sich, dass eine solche zu minimierende Summe auch aus gewichteten Abweichungen der Einzelmesspunkte der Auswertebereiche gebildet werden kann oder aus gewichteten Parametern bzw. Qualitätsmerkmalen der Verzahnung, die aus den Abweichungen der Einzelmesswerte bzw. Messpunkte berechnet worden sind.

Mit dem korrigierten Verzahnverfahren werden durch das korrigierte Wälzfräsen daher Abweichungen des Auswertebereichs AB1 priorisiert korrigiert, um im Auswertebereich AB1 möglichst geringe Abweichungen zu fertigen, während die Abweichungen im Auswertebereich AB2 im Vergleich zum Auswertebereich AB1 größer sein dürfen.

Der ersten zulässigen Abweichung können erste Toleranzen für eine oder mehrere der nachfolgenden Verzahnungsabweichungen und/oder Verzahnungsmodifikationen zugeordnet sein: Profilabweichungen, wie die Profil-Gesamtabweichung, die Profil-Formabweichung, die Profil-Winkelabweichung, die Eingriffswinkelabweichung oder dergleichen, und/oder die Abweichungen einer oder mehrerer Zahnflankenmodifikationen in Profilrichtung, wie Abweichungen der Höhenballigkeit, der Kopf- und/oder Fußrücknahme, der Profil- Winkelmodifikation, der Profilverschränkung oder dergleichen; Flankenlinienabweichungen, wie die Flankenlinien-Gesamtabweichung, die Flankenlinien-Formabweichung, die Flankenlinien-Winkelabweichung, die Spiralwinkelabweichung oder dergleichen und/oder die Abweichungen einer oder mehrerer Zahnflankenmodifikationen in Flankenrichtung, wie Abweichungen der Breitenballigkeit, der Endenrücknahmen, der Flankenlinien-Winkelmodifikation, der Flankenlinienverschränkung oder dergleichen; Teilungsabweichungen, wie die Teilungseinzelabweichung, die Teilungssummenabweichung, den Teilungssprung oder dergleichen; Zahndickenabweichungen; Rundlaufabweichungen.

Der zweiten zulässigen Abweichung können zweite Toleranzen für eine oder mehrere der nachfolgenden Verzahnungsabweichungen und/oder Verzahnungsmodifikationen zugeordnet sein: Profilabweichungen, wie die Profil-Gesamtabweichung, die Profil-Formabweichung, die Profil-Winkelabweichung, die Eingriffswinkelabweichung oder dergleichen, und/oder die Abweichungen einer oder mehrerer Zahnflankenmodifikationen in Profilrichtung, wie Abweichungen der Höhenballigkeit, der Kopf- und/oder Fußrücknahme, der Profil- Winkelmodifikation, der Profilverschränkung oder dergleichen; Flankenlinienabweichungen, wie die Flankenlinien-Gesamtabweichung, die Flankenlinien-Formabweichung, die Flankenlinien-Winkelabweichung, die Spiralwinkelabweichung oder dergleichen und/oder die Abweichungen einer oder mehrerer Zahnflankenmodifikationen in Flankenrichtung, wie Abweichungen der Breitenballigkeit, der Endenrücknahmen, der Flankenlinien-Winkelmodifikation, der Flankenlinienverschränkung oder dergleichen; Teilungsabweichungen, wie die Teilungseinzelabweichung, die Teilungssummenabweichung, den Teilungssprung oder dergleichen; Zahndickenabweichungen; Rundlaufabweichungen.

Vorliegend kann z.B. vorgesehen sein, dass für den ersten Auswertebereich AB1 eine geringere Toleranz für die Flankenlinien-Winkelabweichung vorgeben ist als für den zweiten Auswertebereiche AB2. Weiter kann vorliegend z.B. vorgesehen sein, dass für den ersten Auswertebereich AB1 eine geringere Toleranz für die Höhenballigkeit vorgegeben ist als für den zweiten Auswertebereich AB2. Die erste zulässige Abweichung und die zweite zulässige Abweichung weisen daher insbesondere jeweils mehrere zulässige Toleranzen für zwei oder mehr Parameter bzw. Qualitätsmerkmale der Verzahnung 2 auf.

Im Bearbeitungsschritt (E) erfolgt ein Bearbeiten eines weiteren Werkstücks 2 mit dem korrigierten Verzahnverfahren, wobei das korrigierte Verzahnverfahren im Vergleich zum Verzahnverfahren eine geänderte Prozesskinematik für den Bearbeitungsschritt "Wälzfräsen" aufweist. Da das Wälzfräsen ein Bearbeiten des Werkstücks 2 mit einem nicht abrichtbaren Werkzeug mit geometrisch bestimmter Schneide ist, und zwar dem Wälzfräser 6, ist vorliegend vor dem Bestimmen des korrigierten Verzahnverfahrens für den Bearbeitungsschritt "Wälzfräsen" die Möglichkeit der Veränderung der Werkzeuggeometrie gesperrt und die die Möglichkeit der Veränderung der Prozesskinematik freigegeben worden.

Nachdem das weitere Werkstück 2 mit dem korrigierten Verzahnverfahren im Bearbeitungsschritt "Wälzfräsen" gefertigt worden ist, kann erneut eine Überprüfung der Werkstückgeometrie bzw. der Zahnflanken 4 erfolgen, um einen weiteren Korrekturbedarf festzustellen oder die Wirksamkeit der Korrektur zu überprüfen.

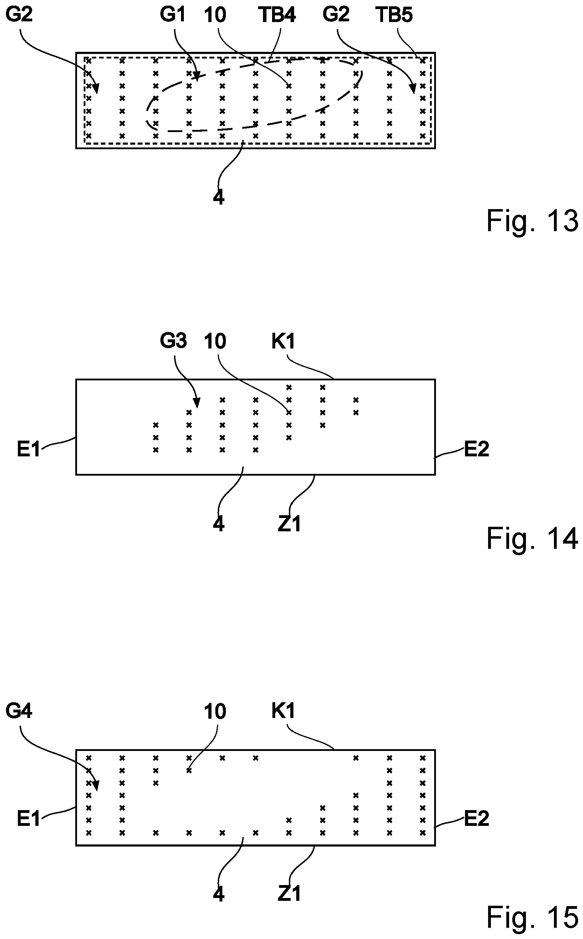

Fig. 13 zeigt eine weitere Variante einer Aufteilung der Zahnflanke 4 in einen ersten Auswertebereich AB1 und einen zweiten Auswertebereich AB2. Dem ersten Auswertebereich AB1 ist ein Teilbereich TB4 zugeordnet. In diesem Fall besteht der Auswertebereich AB1 aus dem Teilbereich TB4. Daraus ergibt sich eine Gruppe G3 von Messpunkten 10 des ersten Auswertebereichs, die in Fig. 14 gezeigt ist. Dem Auswertebereich AB2 ist ein Teilbereich TB5 zugeordnet. Der Teilbereich TB5 weist diejenigen Bereiche der Zahnflanke 4 auf, die innerhalb von TB5 und außerhalb von TB4 angeordnet sind. Mit anderen Worten umfasst der Teilbereich TB5 alle Bereiche der Zahnflanke 4 außer dem Teilbereich TB4. Daraus ergibt sich eine Gruppe G4 von Messpunkten 10 des zweiten Auswertebereichs AB2, die in Fig. 15 gezeigt ist.

Der Teilbereich TB4 entspricht vorliegend einem Tragbereich der Zahnflanke 4, der einen Abstand zur Kopfkante K1, zum Zahnfuß Z1 und zu den Enden E1, E2 der Zahnflanke 4 aufweist. Der Teilbereich TB4 entspricht vorliegend zudem einem Teilbereich der Zahnflanke 4, für den im Betrieb eine vorgegebene Lastschwelle oder ein vorgegebenes Lastkriterium überschritten wird.

Der Teilbereich TB5 entspricht vorliegend einem Bereich der Zahnflanke 4 der an die Kopfkante K1, den Zahnfuß Z1 und die Enden E1, E2 der Zahnflanke 4 angrenzt. Der Teilbereich TB5 entspricht vorliegend zudem einem Teilbereich der Zahnflanke 4, für den im Betrieb eine vorgegebene Lastschwelle oder ein vorgegebenes Lastkriterium unterschritten wird.

Für den ersten Auswertebereich AB1 der Zahnflanke 4 gemäß Fig. 13 ist eine erste zulässige Abweichung der Ist-Geometrie von der Soll-Geometrie vorgegeben. Für den zweiten Auswertebereich AB2 der Zahnflanke 4 gemäß Fig. 13 ist eine zweite zulässige Abweichung der Ist-Geometrie von der Soll-Geometrie vorgegeben. Die erste zulässige Abweichung ist geringer als die zweite zulässige Abweichung.

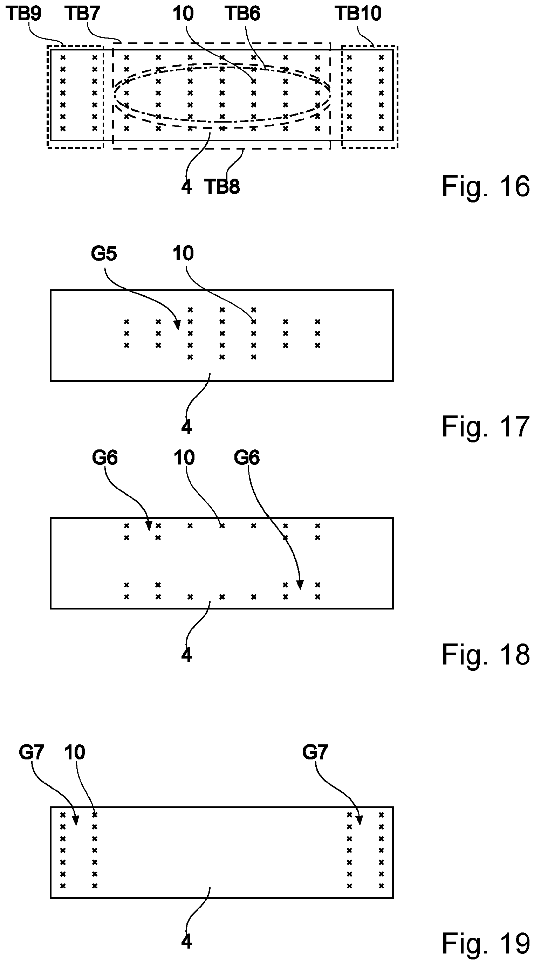

Fig. 16 zeigt eine weitere Variante einer Aufteilung der Zahnflanke 4 in einen ersten Auswertebereich AB1, einen zweiten Auswertebereich AB2 und einen dritten Auswertebereich AB3. Dem ersten Auswertebereich AB1 ist ein Teilbereich TB6 der Zahnflanke 4 zugeordnet. In diesem Fall besteht der Auswertebereich AB1 aus dem Teilbereich TB6. Daraus ergibt sich eine Gruppe G5 von Messpunkten 10 des ersten Auswertebereichs AB1, die in Fig. 17 gezeigt ist. Dem zweiten Auswertebereich AB2 sind die Teilbereiche TB7 und TB8 gemäß Fig. 16 zugeordnet. Daraus ergibt sich eine Gruppe G6 von Messpunkten 10 des zweiten Auswertebereichs AB2, die in Fig. 18 gezeigt ist. Dem dritten Auswertebereich AB1 sind die Teilbereiche TB9 und TB10 gemäß Fig. 16 zugeordnet. Daraus ergibt sich eine Gruppe G7 von Messpunkten 10 des dritten Auswertebereichs AB3, die in Fig. 19 gezeigt ist.

Für den ersten Auswertebereich AB1 der Zahnflanke 4 gemäß Fig. 16 ist eine erste zulässige Abweichung der Ist-Geometrie von der Soll-Geometrie vorgegeben. Für den zweiten Auswertebereich AB2 der Zahnflanke 4 gemäß Fig. 16 ist eine zweite zulässige Abweichung der Ist-Geometrie von der Soll-Geometrie vorgegeben. Für den dritten Auswertebereich AB3 der Zahnflanke 4 gemäß Fig. 16 ist eine dritte zulässige Abweichung der Ist-Geometrie von der Soll-Geometrie vorgegeben. Die erste zulässige Abweichung ist geringer als die zweite zulässige Abweichung. Die zweite zulässige Abweichung ist geringer als die dritte zulässige Abweichung. Ein korrigiertes Verzahnverfahren, das auf Grundlage der ersten, zweiten und dritten zulässigen Abweichungen angepasst worden ist, ermöglicht die Einhaltung enger Toleranzen für den ersten Auswertebereich, wobei für den zweiten und dritten Auswertebereich größere Abweichungen zugelassen werden.

Das Ergebnis des ersten Korrekturschritts ist daher ein korrigiertes Wälzfräsen, das einen Bearbeitungsschritt des korrigierten Verzahnverfahrens darstellt, und das die Einhaltungen von verschiedenen Toleranzen in priorisierten Bereichen der Zahnflanken 4 ermöglicht.

Das Verzahnverfahren kann ergänzend zu dem voranstehend beschriebenen Wälzfräsen einen oder mehrere weitere Bearbeitungsschritte aufweisen, die mittels einen zugeordneten Korrekturschritts korrigiert werden können.

Beispielsweise kann vorgesehen sein, dass das Werkstück 2 nach dem Wälzfräsen gehärtet und anschließend geschliffen wird.

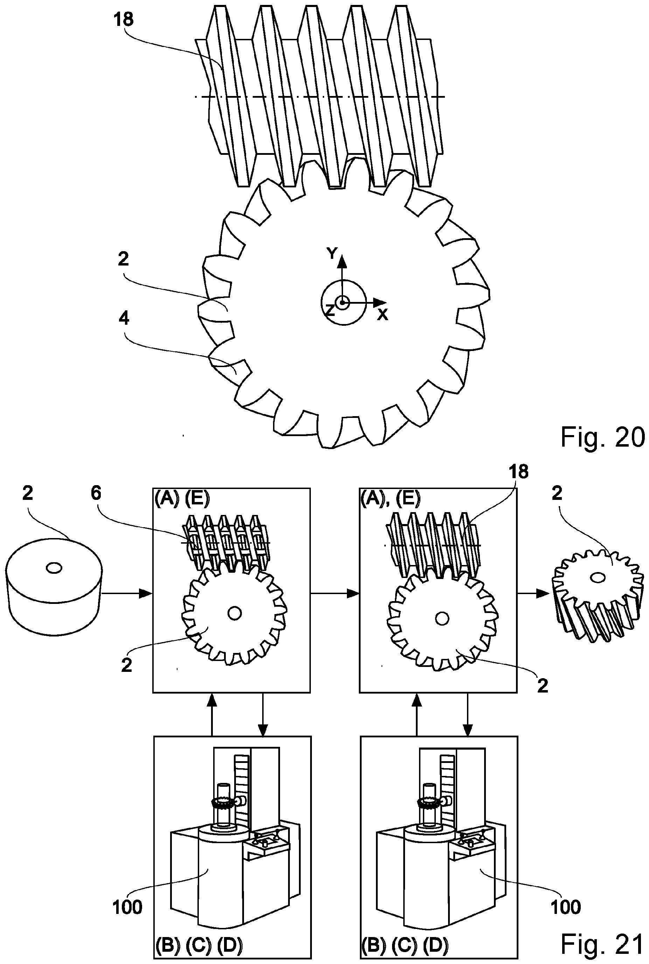

Es kann daher vorgesehen sein, dass das Verzahnverfahren den Bearbeitungsschritt "Wälzschleifen" aufweist, so dass im Verfahrensschritt (A) ein Bearbeiten von zuvor wälzgefrästen Zahnflanken 4 des Werkstücks 2 mittels eines Schleifwerkzeugs 18 erfolgt (Fig. 20). Das Wälzschleifen kann analog zum voranstehend beschriebenen Wälzfräsen korrigiert werden, um ein korrigiertes Wälzschleifen anzugeben. Dem Wälzschleifen ist daher ein zweiter Korrekturschritt bzw. eine zweite Korrekturschleife zugeordnet, um ein korrigiertes Wälzschleifen als Bearbeitungsschritt des korrigierten Verzahnverfahrens anzugeben.

Fig. 21 zeigt eine mögliche Prozesskette für die Fertigung von Zahnrädern 2. Das Verzahnverfahren umfasst die Bearbeitungsschritte Wälzfräsen (A) und Wälzschleifen (A). Die Bearbeitungsschritte Wälzfräsen (A) und Wälzschleifen (A) können durch das erfindungsgemäße Verfahren in einer jeweils zugeordneten Korrekturschleife korrigiert werden, so dass nach der Korrektur die Zahnräder 2 mit einem korrigierten Wälzfräsen (E) und/oder einem korrigierten Wälzschleifen (E) bearbeitet werden.

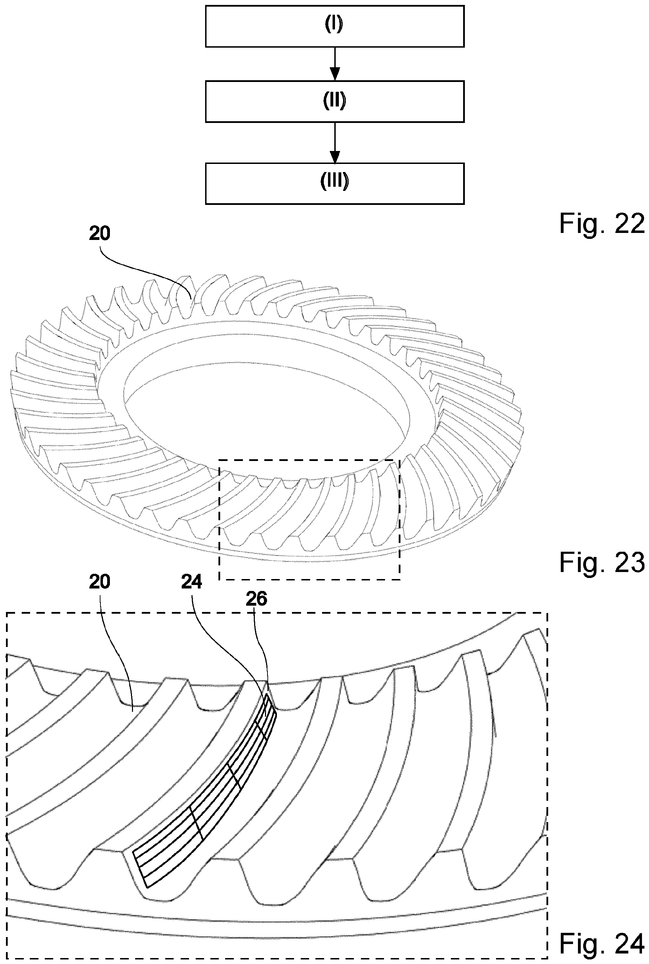

Fig. 22 zeigt einen Ablaufplan eines erfindungsgemäßen Verfahrens gemäß dem zweiten Aspekt der Erfindung. In einem ersten Verfahrensschritt (I) erfolgt ein Messen einer mittels eines Verzahnverfahrens erzeugten Ist-Geometrie einer Zahnflanke 4 eines Werkstücks 2 mittels eines Messverfahrens. In einem zweiten Verfahrensschritt (II) erfolgt ein Bestimmen einer Abweichung der Ist-Geometrie der Zahnflanke von einer vorgegebenen Soll-Geometrie der Zahnflanke. In einem dritten Verfahrensschritt (III) erfolgt eine Auswertung der Abweichung wobei die Auswertung der Abweichung die Vorgabe aufweist, dass für einen ersten Auswertebereich der Zahnflanke eine erste zulässige Abweichung der Ist-Geometrie von der Soll-Geometrie vorgegeben ist, dass für einen zweiten Auswertebereich der Zahnflanke eine zweite zulässige Abweichung der Ist-Geometrie von der Soll-Geometrie vorgegeben ist und dass die erste zulässige Abweichung geringer ist als die zweite zulässige Abweichung.

Der erste Auswertebereich und der zweite Auswertebereich sowie die zulässigen Abweichungen entsprechen denjenigen Auswertebereichen und Abweichungen, die bereits für den ersten Aspekt der Erfindung beschrieben worden sind. Alle Varianten und Ausgestaltung der Auswertebereiche und der zulässigen Abweichungen, die für den ersten Aspekt der Erfindung beschrieben worden sind, gelten daher auch für den zweiten Aspekt der Erfindung und lassen sich in identischer Weise auf den zweiten Aspekt der Erfindung übertragen.

Fig. 23 zeigt ein Kegelrad 20 als Werkstück 20, wobei Fig. 24 eine Ausschnittvergrößerung des Kegelrads 20 aus Fig. 23 darstellt.

Das Kegelrad 20 kann analog zu dem voranstehend beschriebenen Stirnrad oder dem nachstehend beschriebenen Beispiel bearbeitet und gemessen werden. Für einen Zahn 22 des Kegelrads ist ein Messgitter 24 gezeigt, dem analog zu den Figuren 7-19 Auswertebereiche und Teilbereiche einer Zahnflanke 26 mit einer entsprechenden zulässigen Abweichung und Wichtungen zugeordnet sein können.

Es kann vorgesehen sein, dass beim Bearbeiten des Werkstücks 20 mittels des Verzahnverfahrens alle Zahnflanken 26 des Werkstücks 20 bearbeitet werden, wobei beim Messen der mittels des Verzahnverfahrens erzeugten Ist-Geometrie zwei oder mehr Zahnflanken 26 des Werkstücks 20 mittels des Messverfahrens gemessen werden; wobei beim Bestimmen von Abweichungen der Ist-Geometrie der jeweils gemessenen Zahnflanken 26 von der vorgegebenen Soll-Geometrie eine mittlere Abweichung aus den Abweichungen der jeweils gemessenen Zahnflanken 26 bestimmt wird; und wobei beim Bestimmen des korrigierten Verzahnverfahrens zur zumindest teilweisen Reduzierung der Abweichungen anhand der mittleren Abweichung erfolgt und für alle Zahnflanken 26 gilt.

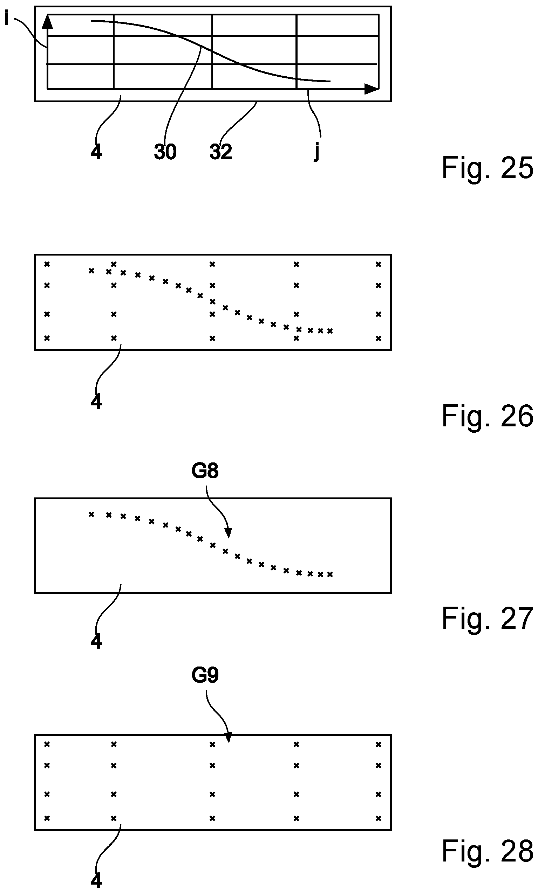

Die Figuren 25 - 28 zeigen exemplarisch für eine Zahnflanke 4, dass Auswertebereiche AB1 und AB2 einander überlappen können. Der erste Auswertebereich AB1 weist eine Gruppe G8 von Messpunkten 10 auf, die in Fig. 27 gezeigt sind und die scannend entlang eines Kontaktpfads 30 der Zahnflanke 4 erfasst worden sind. Der zweite Auswertebereich AB2 weist eine Gruppe G9 von Messpunkten 10 auf, die durch das Messgitter 32 definiert worden sind, wobei die Gitterlinien i, j, ebenfalls scannend abgetastet worden sind, um die Messpunkte 10 gemäß Fig. 28 zu ermitteln.

Keiner der Messpunkte 10, der dem ersten Auswertebereich AB1 (Fig. 27) zugeordnet ist, ist dem zweiten Auswertebereich AB2 (Fig. 28) zugeordnet.

Der Kontaktpfad 30 ist mit einer höheren Auflösung gescannt worden als die Gitterlinien i, j des Messgitters 32.

## Patentansprüche

1. Verfahren, mit den Verfahrensschritten:
- Bearbeiten eines Werkstücks (2) mittels eines Verzahnverfahrens, wobei eine Zahnflanke (4) des Werkstücks (2) hergestellt oder bearbeitet wird;
- Messen einer mittels des Verzahnverfahrens erzeugten Ist-Geometrie der Zahnflanke (4) des Werkstücks (2) mittels eines Messverfahrens;
- Bestimmen einer Abweichung der Ist-Geometrie der Zahnflanke (4) von einer vorgegebenen Soll-Geometrie der Zahnflanke (4);
- Bestimmen eines korrigierten Verzahnverfahrens zur zumindest teilweisen Reduzierung der Abweichung;
- Bearbeiten des Werkstücks (2) und/oder eines weiteren Werkstücks (2) mittels des korrigierten Verzahnverfahrens;
**dadurch gekennzeichnet,**
- **dass** das Bestimmen des korrigierten Verzahnverfahrens zur zumindest teilweisen Reduzierung der Abweichung die Vorgabe aufweist, dass zwischen einem ersten Auswertebereich (AB1) der Zahnflanke (4) und einem zweiten Auswertebereich (AB2) der Zahnflanke (4) unterschieden wird,
- wobei für den ersten Auswertebereich (AB1) der Zahnflanke (4) eine erste zulässige Abweichung der Ist-Geometrie von der Soll-Geometrie vorgegeben ist, für den zweiten Auswertebereich (AB2) der Zahnflanke (4) eine zweite zulässige Abweichung der Ist-Geometrie von der Soll-Geometrie vorgegeben ist und die erste zulässige Abweichung geringer ist als die zweite zulässige Abweichung,
und/oder
- wobei für eine mathematische Optimierung zur zumindest teilweisen Reduzierung der Abweichung für eine Abweichung des ersten Auswertebereichs (AB1) der Zahnflanke (4) eine erste Wichtung vorgegeben wird und für eine Abweichung des zweiten Auswertebereichs (AB2) der Zahnflanke (4) eine zweite Wichtung vorgegeben wird, wobei die erste Wichtung größer ist als die zweite Wichtung.

2. Verfahren nach Anspruch 1,
**dadurch gekennzeichnet,**
- **dass** der erste Auswertebereich (AB1) einen oder mehrere Teilbereiche (TB1, TB4, TB6) der Zahnflanke (4) aufweist, die zusammenhängend und/oder zumindest abschnittsweise beabstandet zueinander angeordnet sind und/oder
- **dass** der zweite Auswertebereich (AB2) einen oder mehrere Teilbereiche (TB2, TB3, TB5, TB7, TB8) der Zahnflanke (4) aufweist, die zusammenhängend und/oder zumindest abschnittsweise beabstandet zueinander angeordnet sind.

3. Verfahren einem der voranstehenden Ansprüche,
**dadurch gekennzeichnet,**
- **dass** dem ersten Auswertebereich (AB1) ein Tragbereich der Zahnflanke (4) zugeordnet ist, der einen Abstand zu Enden oder Kanten der Zahnflanke (4) aufweist
und/oder
- **dass** dem zweiten Auswertebereich (AB2) ein Randbereich zugeordnet ist, der Enden oder Kanten der Zahnflanke (4) aufweist oder an diese angrenzt.

4. Verfahren einem der voranstehenden Ansprüche,
**dadurch gekennzeichnet,**
- **dass** dem ersten Auswertebereich (AB1) einer oder mehrere Teilbereiche der Zahnflanke zugeordnet sind, die im Betrieb einen Kontakt zu einer Gegenflanke aufweisen; und/oder
- **dass** dem ersten Auswertebereich (AB1) einer oder mehrere Teilbereiche der Zahnflanke zugeordnet sind, für die im Betrieb eine vorgegebene Lastschwelle oder ein vorgegebenes Lastkriterium überschritten wird;
und/oder
- **dass** dem zweiten Auswertebereich (AB2) einer oder mehrere Teilbereiche der Zahnflanke zugeordnet sind, die im Betrieb keinen Kontakt zu einer Gegenflanke aufweisen; und/oder
- **dass** dem zweiten Auswertebereich (AB2) einer oder mehrere Teilbereiche der Zahnflanke zugeordnet sind, für die im Betrieb eine vorgegebene Lastschwelle oder ein vorgegebenes Lastkriterium unterschritten wird.

5. Verfahren einem der voranstehenden Ansprüche,
**dadurch gekennzeichnet,**
- **dass** beim Messen der mittels des Verzahnverfahrens erzeugten Ist-Geometrie der Zahnflanke (4) des Werkstücks (2) mittels des Messverfahrens ein Messgitter (8) mit Messpunkten (10) erfasst wird,
- **dass** beim Bestimmen der Abweichung der Ist-Geometrie der Zahnflanke (4) von der vorgegebenen Soll-Geometrie der Zahnflanke (4) für jeden Messpunkt (10) des Messgitters (8) eine jeweilige Abweichung der Ist-Position des jeweiligen Messpunkts (10) von der Soll-Position des jeweiligen Messpunkts (10) bestimmt wird, und
- **dass** eine erste Gruppe (G1) der Messpunkte (10) dem ersten Auswertebereich (AB1) zugeordnet ist und dass eine zweite Gruppe (G2) der Messpunkte (10) dem zweiten Auswertebereich (AB2) zugordnet ist.

6. Verfahren einem der voranstehenden Ansprüche,
**dadurch gekennzeichnet,**
- **dass** nach dem Bearbeiten des Werkstücks (2) und/oder eines weiteren Werkstücks (2) mittels des korrigierten Verzahnverfahrens eine Ist-Abweichung einer mittels des korrigierten Verzahnverfahrens bearbeiteten Zahnflanke (4) für den ersten Auswertebereich geringer ist als die erste zulässige Abweichung und für den zweiten Auswertebereich geringer ist als die zweite zulässige Abweichung.

7. Verfahren einem der voranstehenden Ansprüche,
**dadurch gekennzeichnet,**
- **dass** beim Bearbeiten des Werkstücks (2) mittels des Verzahnverfahrens zwei oder mehr Zahnflanken (4) des Werkstücks (2) hergestellt oder bearbeitet werden,
- **dass** beim Messen der mittels des Verzahnverfahrens erzeugten Ist-Geometrie zwei oder mehr Zahnflanken (4) des Werkstücks (2) mittels des Messverfahrens gemessen werden;
- **dass** beim Bestimmen von Abweichungen der Ist-Geometrie der jeweils gemessenen Zahnflanken (4) von der vorgegebenen Soll-Geometrie eine mittlere Abweichung aus den Abweichungen der jeweils gemessenen Zahnflanken (4) bestimmt wird; und
- **dass** Bestimmen des korrigierten Verzahnverfahrens zur zumindest teilweisen Reduzierung der Abweichungen anhand der mittleren Abweichung erfolgt und für alle Zahnflanken (4) gilt.

8. Verfahren einem der voranstehenden Ansprüche,
**dadurch gekennzeichnet,**
- **dass** das korrigierte Verzahnverfahren im Vergleich zum Verzahnverfahren eine geänderte Prozesskinematik aufweist
und/oder
- **dass** das korrigierte Verzahnverfahren im Vergleich zum Verzahnverfahren eine geänderte Werkzeuggeometrie aufweist.

9. Verfahren einem der voranstehenden Ansprüche,
**dadurch gekennzeichnet,**
- **dass** vor dem Bestimmen des korrigierten Verzahnverfahrens die Möglichkeit der Veränderung der Werkzeuggeometrie freigegeben oder gesperrt wird; und/oder
- **dass** vor dem Bestimmen des korrigierten Verzahnverfahrens die Möglichkeit der Veränderung der Prozesskinematik freigegeben oder gesperrt wird.

10. Verfahren einem der voranstehenden Ansprüche,
**dadurch gekennzeichnet,**
- **dass** das Bestimmen des korrigierten Verzahnverfahrens mittels einer nichtlinearen Optimierung durchgeführt wird.

11. Verfahren einem der voranstehenden Ansprüche,
**dadurch gekennzeichnet, dass**
- der ersten zulässigen Abweichung erste Toleranzen für eine oder mehrere der nachfolgenden Verzahnungsabweichungen zugeordnet sind:
- Profilabweichungen, wie die Profil-Gesamtabweichung, die Profil-Formabweichung, die Profil-Winkelabweichung, die Eingriffswinkelabweichung oder dergleichen, und/oder die Abweichungen einer oder mehrerer Zahnflankenmodifikationen in Profilrichtung, wie Abweichungen der Höhenballigkeit, der Kopf- und/oder Fußrücknahme, der Profil-Winkelmodifikation, der Profilverschränkung oder dergleichen;
- Flankenlinienabweichungen, wie die Flankenlinien-Gesamtabweichung, die Flankenlinien-Formabweichung, die Flankenlinien-Winkelabweichung, die Spiralwinkelabweichung oder dergleichen und/oder die Abweichungen einer oder mehrerer Zahnflankenmodifikationen in Flankenrichtung, wie Abweichungen der Breitenballigkeit, der Endenrücknahmen, der Flankenlinien-Winkelmodifikation, der Flankenlinienverschränkung oder dergleichen;
- Teilungsabweichungen, wie die Teilungseinzelabweichung, die Teilungssummenabweichung, den Teilungssprung oder dergleichen;
- Zahndickenabweichungen;
- Rundlaufabweichungen;
- Rundheitsabweichungen;
- Planlaufabweichungen;
- Ebenheitsabweichungen;
- Verwindung / Verschränkung;
und/oder
- der zweiten zulässigen Abweichung zweite Toleranzen für eine oder mehrere der nachfolgenden Verzahnungsabweichungen zugeordnet sind:
- Profilabweichungen, wie die Profil-Gesamtabweichung, die Profil-Formabweichung, die Profil-Winkelabweichung, die Eingriffswinkelabweichung oder dergleichen, und/oder die Abweichungen einer oder mehrerer Zahnflankenmodifikationen in Profilrichtung, wie Abweichungen der Höhenballigkeit, der Kopf- und/oder Fußrücknahme, der Profil-Winkelmodifikation, der Profilverschränkung oder dergleichen;
- Flankenlinienabweichungen, wie die Flankenlinien-Gesamtabweichung, die Flankenlinien-Formabweichung, die Flankenlinien-Winkelabweichung, die Spiralwinkelabweichung oder dergleichen und/oder die Abweichungen einer oder mehrerer Zahnflankenmodifikationen in Flankenrichtung, wie Abweichungen der Breitenballigkeit, der Endenrücknahmen, der Flankenlinien-Winkelmodifikation, der Flankenlinienverschränkung oder dergleichen;
- Teilungsabweichungen, wie die Teilungseinzelabweichung, die Teilungssummenabweichung, den Teilungssprung oder dergleichen;
- Zahndickenabweichungen;
- Rundlaufabweichungen;
- Rundheitsabweichungen;
- Planlaufabweichungen;
- Ebenheitsabweichungen;
- Verwindung / Verschränkung;
- wobei die ersten Toleranzen zumindest teilweise von den zweiten Toleranzen abweichen oder zu diesen identisch sind und/oder wobei die der ersten zulässigen Abweichung zugeordneten Verzahnungsabweichungen zumindest teilweise von den der zweiten zulässigen Abweichung zugeordneten Verzahnungsabweichungen abweichen oder zu diesen identisch sind.

12. Verfahren einem der voranstehenden Ansprüche,
**dadurch gekennzeichnet**,
- die erste zulässige Abweichung der Ist-Geometrie von der Soll-Geometrie für einen jeweiligen Messpunkt oder einen Abschnitt des ersten Auswertebereichs (AB1) ausgewählt aus einem Bereich kleinergleich 10 µm ist, insbesondere ausgewählt aus einem Bereich kleinergleich 5 µm ist,
und
- die zweite zulässige Abweichung der Ist-Geometrie von der Soll-Geometrie für einen jeweiligen Messpunkt oder einen Abschnitt des zweiten Auswertebereichs ausgewählt aus einem Bereich kleinergleich 15 µm ist, insbesondere ausgewählt aus einem Bereich kleinergleich 10 µm ist.

13. Verfahren einem der voranstehenden Ansprüche,
**dadurch gekennzeichnet, dass**
- das Verzahnverfahren einen oder mehrere der nachfolgenden Verfahrensschritte aufweist:
- spanabhebendes Bearbeiten des Werkstücks (2) mit einem Werkzeug (6) mit geometrisch bestimmter Schneide aufweisen, wie Wälzfräsen, Formfräsen, Wälzstoßen, Wälzschälen, Kegelradfräsen oder dergleichen;
- spanabhebendes Bearbeiten des Werkstücks (2) mit einem Werkzeug (18) mit geometrisch unbestimmter Schneide aufweisen, wie Schleifen, Läppen, Honen oder dergleichen;
- Vorverzahnen im weichen Zustand des Werkstücks (2);
- Hartbearbeitung des Werkstücks (2) im harten Zustand nach dem Härten des Werkstücks (2).

14. Verfahren einem der voranstehenden Ansprüche,
**dadurch gekennzeichnet, dass**
- Werkstück (2) ein Zahnrad (2) einer Laufverzahnung ist, wie ein Stirnrad, ein Kegelrad oder dergleichen,
- wobei beim Bearbeiten des Zahnrads (2) mittels des Verzahnverfahrens eine Mehrzahl von Zahnflanken (4) des Zahnrads (2) bearbeitet oder hergestellt werden.

15. Verfahren, mit den Verfahrensschritten:
- Messen einer mittels eines Verzahnverfahrens erzeugten Ist-Geometrie einer Zahnflanke (4) eines Werkstücks (2) mittels eines Messverfahrens;
- Bestimmen einer Abweichung der Ist-Geometrie der Zahnflanke von einer vorgegebenen Soll-Geometrie der Zahnflanke;
- Auswertung der Abweichung;
**dadurch gekennzeichnet,**
- **dass** die Auswertung der Abweichung die Vorgabe aufweist,
- **dass** für einen ersten Auswertebereich der Zahnflanke eine erste zulässige Abweichung der Ist-Geometrie von der Soll-Geometrie vorgegeben ist,
- **dass** für einen zweiten Auswertebereich der Zahnflanke eine zweite zulässige Abweichung der Ist-Geometrie von der Soll-Geometrie vorgegeben ist und
- **dass** die erste zulässige Abweichung geringer ist als die zweite zulässige Abweichung.

16. Verfahren nach Anspruch 15,
**dadurch gekennzeichnet,**
- **dass** dem ersten Auswertebereich ein Tragbereich Zahnflanke zugeordnet ist, der einen Abstand zu Enden oder Kanten der Zahnflanke aufweist und/oder
- **dass** dem zweiten Auswertebereich ein Randbereich zugeordnet ist, der Enden oder Kanten der Zahnflanke aufweist oder an diese angrenzt.

17. Verfahren einem der voranstehenden Ansprüche 15 oder 16,
**dadurch gekennzeichnet,**
- **dass** beim Messen der mittels des Verzahnverfahrens erzeugten Ist-Geometrie der Zahnflanke des Werkstücks mittels des Messverfahrens ein Messgitter mit Messpunkten erfasst wird,
- **dass** beim Bestimmen der Abweichung der Ist-Geometrie der Zahnflanke von der vorgegebenen Soll-Geometrie der Zahnflanke für jeden Messpunkt des Messgitters eine Abweichung der Ist-Position des jeweiligen Messpunkts von der Soll-Position des jeweiligen Messpunkts bestimmt wird, und
- **dass** eine erste Gruppe der Messpunkte dem ersten Auswertebereich zugeordnet ist und dass eine zweite Gruppe der Messpunkte dem zweiten Auswertebereich zugordnet ist.
